Europäisches Patentamt

European Patent Office

Office européen des brevets

(11) Publication number: 0 398 089
A2

# EUROPEAN PATENT APPLICATION

(21) Application number: 90108436.8

(51) Int. Cl.⁵: H04N 5/21

(22) Date of filing: 04.05.90

(30) Priority: 15.05.89 JP 121210/89

(43) Date of publication of application:
22.11.90 Bulletin 90/47

(84) Designated Contracting States:
DE FR GB

(71) Applicant: Kabushiki Kaisha Toshiba
72, Horikawa-cho Saiwai-ku
Kawasaki-shi(JP)

(72) Inventor: Hagino, Hideyuki, c/o Intellectual
Property Div.
K.K. Toshiba, 1-1 Shibauro 1-chome
Minato-ku, Tokyo 105(JP)
Inventor: Matsuki, Tatsuya, c/o Intellectual
Property Div.
K.K. Toshiba, 1-1 Shibauro 1-chome
Minato-ku, Tokyo 105(JP)

(74) Representative: Lehn, Werner, Dipl.-Ing. et al
Hoffmann, Eitle & Partner Patentanwälte
Arabellastrasse 4
D-8000 München 81(DE)

(54) Comb filter circuit for removing noise.

(57) A comb filter circuit includes a delay circuit (12) for delaying an input signal by a predetermined period to output a delayed signal. A subtractor (11) calculates a difference between the input signal and the delayed signal output from the delay circuit (12) to output a difference signal. A limiter circuit (13) limits the difference signal output from the subtractor (11) by a limiter level changed in accordance with a level of any one of the input signal and the delayed signal. A calculator (16, 18) receives the input signal and the limit signal from the limiter circuit (13) to perform a predetermined calculating operation. A noncorrelation detector (19) for detecting a degree of noncorrelation between the input signal and the delayed signal from the difference signal output from the subtracting means (11) at a level changed in accordance with a level of any one of the input signal and the delayed signal.

INPUT SIGNAL

LIMITER — AMPLIFIER

NONCORRE-LATION DETECTOR

DELAY CIRCUIT

OUTPUT SIGNAL  OUTPUT SIGNAL

F I G. 1

EP 0 398 089 A2

## Comb filter circuit for removing noise

The present invention relates to a comb filter circuit and, more particularly, to a comb filter circuit for removing noise included in a luminance signal in a video cassette recorder (VCR) or a television set.

A comb filter circuit is a circuit which performs an addition or subtraction of an input signal and a signal obtained by delaying the input signal by a predetermined period, thereby obtaining a desired signal. A pass band is repeated every predetermined cycle, and the resultant characteristics have a comb-like shape. Therefore, this filter is named a comb filter. In a video circuit used in a video cassette recorder (VCR) or television set, the filter is particularly used for removing noise included in a luminance signal.

In a conventional comb filter circuit, an output from a subtractor for calculating a difference between an input signal and its delayed signal is generally supplied to a noncorrelation circuit and a limiter circuit. A noncorrelation state of the input signal is detected by the noncorrelation circuit. When an output from the noncorrelation circuit is higher than a predetermined detection level, i.e., there is no correlation between the two signals, the subtraction is stopped.

In a conventional comb filter circuit, in general, a limit level of the limiter circuit or a detection level of the noncorrelation detector is set to be constant. For this reason, when a change in output signal is large, a signal which should not be limited may be limited. When the degreed of noncorrelation is small, a noncorrelation state may be detected by the noncorrelation detector to stop a subtracting operation.

Therefore, noise cannot be satisfactorily removed from a luminance signal.

It is an object of the present invention to provide a comb filter circuit capable of obtaining visually excellent picture quality by satisfactorily removing noise.

In order to achieve the above object, according to the present invention, a comb filter circuit comprises:

a delaying means for delaying an input signal by a predetermined period to output a delayed signal;

a subtracting means for performing an addition or subtraction of the input signal and the delayed signal output from the delaying means to output a difference signal;

a limiter means for limiting the difference signal output from the subtracting means by a limiter level changed in accordance with a level of any one of the input signal and the delayed signal to output a limit signal; and

a calculating means for receiving the input signal and the limit signal from the limiter means to perform a predetermined calculating operation.

The aspects and other features of the present invention will be described in the following detailed description with reference to the accompanying drawings, in which:

Fig. 1 is a circuit diagram of a comb filter circuit according to an embodiment of the present invention;

Fig. 2 is a circuit diagram of a comb filter circuit according to another embodiment of the present invention;

Fig. 3 is a detailed circuit diagram showing a limiter circuit in Figs. 1 and 2; and

Fig. 4 is a detailed circuit diagram showing a noncorrelation detector and a subtractor in Figs. 1 and 2.

An embodiment of the present invention will be described below with reference to the accompanying drawings.

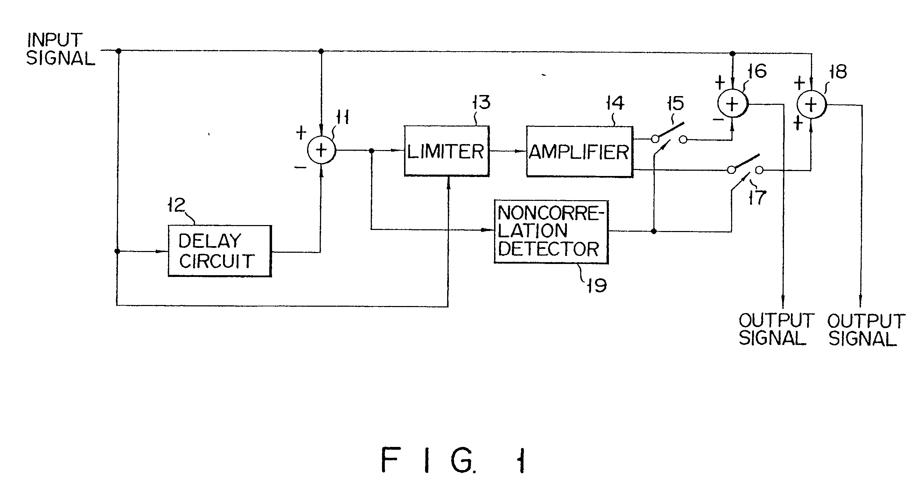

Fig. 1 is a circuit diagram showing a comb filter circuit according to an embodiment of the present invention. An input signal is input to a subtractor 11 directly and to the subtractor 11 through a delay circuit (1HDL) 12 for delaying the input signal by one horizontal period, and a difference between the two signals is calculated to extract crosstalk and noncorrelation components. An output signal from the subtractor 11 is input to a limiter circuit 13. The limit level of this limiter circuit 13 is controlled in accordance with a level of the input signal. For example, when the level of the input signal is decreased, the limit level is controlled to be increased. When the level of the input signal is increased, the limit level is controlled to be decreased. Therefore, a level of the output from the subtracting circuit 11 is controlled by the limiter circuit 13 and input to an amplifier 14 having a gain of -6 dB. One output from the amplifier 14 is input to a subtractor 16 through a switch 15. In this subtractor 16, a difference between this output and the initial input signal is calculated to obtain an output signal from which noise is removed. The other output from the amplifier 14 is input to an adder 18 through a switch 17. In this adder 18, the initial input signal and the output are added to obtain an output signal including noise.

In addition, an output from the subtractor 11 is input to a noncorrelation detector 19, and a noncorrelation state of the input signal is detected by the noncorrelation detector 19. When the output from the subtractor 11 is larger than a predetermined level, i.e., when a noncorrelation state is detected, the switches 15 and 17 are controlled to be turned off, and the adding and subtracting operations in the subtractor 16 and the adder 18 are stopped, respectively.

In a circuit having the above arrangement, when the level of the input signal is decreased to be close to a black level, a limiter level of the limiter circuit 13 is controlled to be increased. Therefore, a crosstalk component serving as a noise component is easily passed through the limiter circuit 13. For this reason, when the signal represents a black level having a visually higher sensitivity, a noise component included in a signal obtained by the subtractor 16 is reduced, thereby obtaining excellent picture quality upon displaying in accordance with this signal.

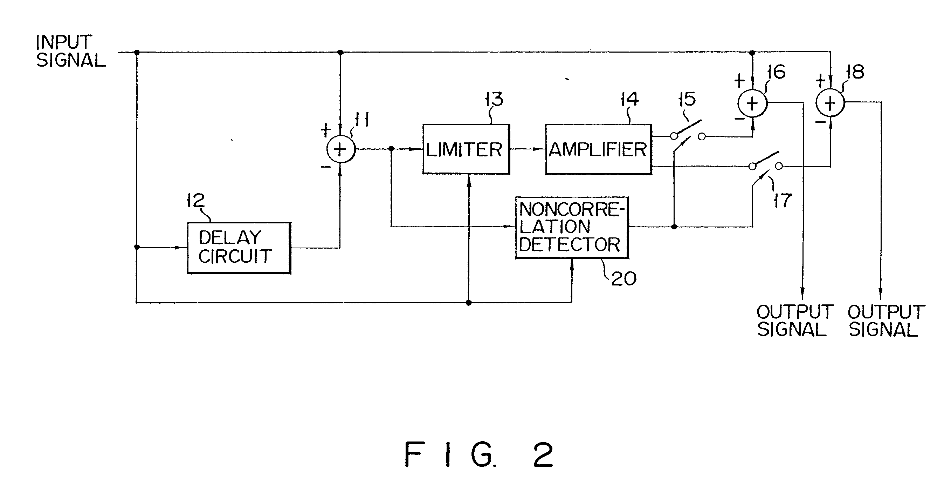

Fig. 2 is a circuit diagram showing a comb filter circuit according to another embodiment of the present invention. In the circuit according to this embodiment, a noncorrelation detector 20 whose detection level is controlled in accordance with a level of the above-described signal is arranged in place of the noncorrelation detector 19. For example, when a level of an input signal is decreased, the noncorrelation detection level of the noncorrelation detector 20 is controlled to be increased. When the level of the input signal is increased, the noncorrelation detection level is controlled to be decreased.

In the circuit according to this embodiment, when the level of the input signal is decreased to be close to a black level, the noncorrelation detection level of the noncorrelation detector 20 is controlled to be increased, thereby removing a noise component having a small level. The circuit construction of the noncorrelation detector 20 is identical to that of the noncorrelation detector 19.

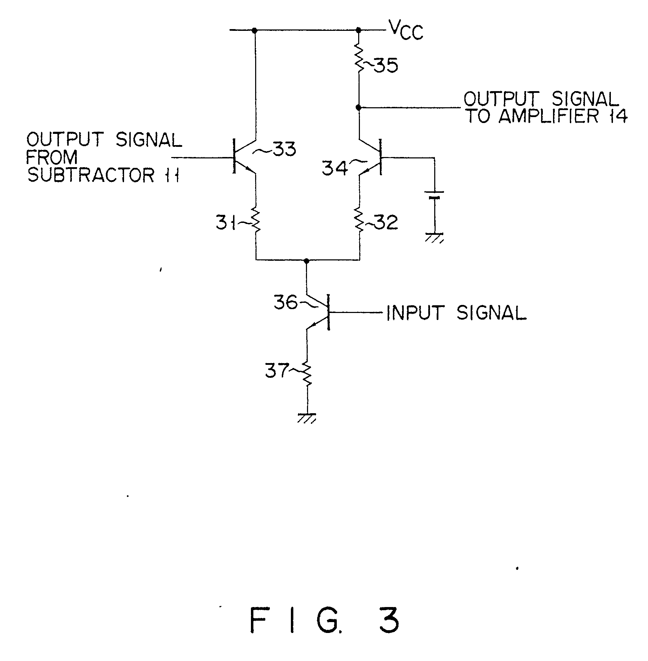

Fig. 3 is a circuit diagram of the limiter circuit 13 used in the circuits of the above embodiments. The limiter circuit comprises two npn transistors 33 and 34 whose emitters are connected to each other through resistors 31 and 32 and whose bases are supplied with an output signal from the subtractor 11 and a constant DC vias voltage, respectively. A power source voltage Vcc is connected to a load resistor 35 for the transistor 34 and the collector of the transistor 33. The circuit has an npn transistor 36 whose collector is connected to the common connecting point of the resistances 31 and 32 and whose base is supplied with the input signal. A resistor 37 is connected between the emitter of the transistor 36 and ground. A signal obtained by the collector of the transistor 34 is input to an amplifier 14.

In the circuit with the above arrangement, when a level of the input signal is decreased to reduce a current supplied to the transistor 36, a limit level is increased with respect to the output signal from the subtractor 11. When a level of the input signal is increased to increase the current supplied to the transistor 36, the limit level is decreased with respect to the output signal from the subtractor 11.

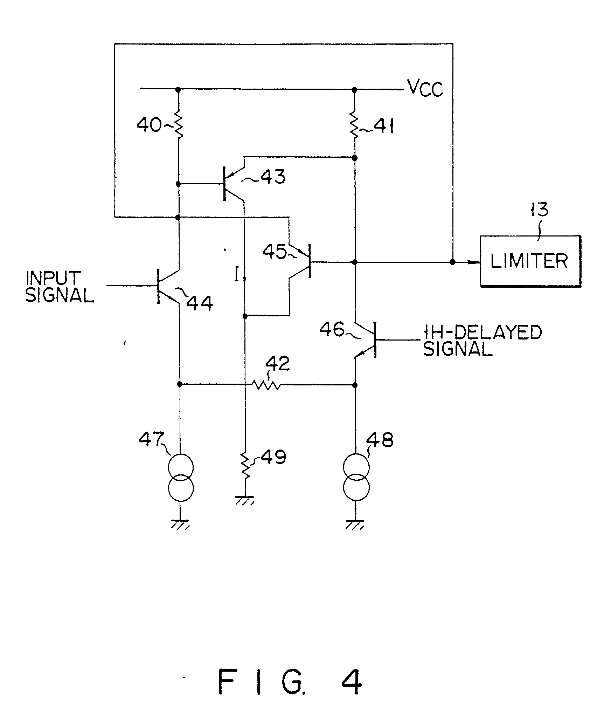

Fig. 4 is a circuit diagram for explaining a noncorrelation state of an input signal detected by the noncorrelation detector 19. The circuit shown in Fig. 4 includes the noncorrelation detector 19 and subtractor 11.

The collector of an npn transistor 44 receiving an input signal is connected to the power source Vcc through a resistor 40 and to the base of a pnp transistor 43 and the emitter of a pnp transistor 45. The emitter of the npn transistor 44 is grounded through a constant-current power supply 47 and connected to the emitter of an npn transistor 46 through a resistor 42. The emitter of the pnp transistor 43 is connected to the Vcc through a resistor 41, and the collector of the pnp transistor 43 is grounded through a resistor 49 and connected to the collector of the pnp transistor 45. In addition, the emitter of the transistor 46 is grounded through a constant-current power supply 48, and the collector of the npn transistor 46 is connected to the base of the pnp transistor 45 and the resistor 41. Note that the base of the npn transistor 46 receives a 1H-delayed signal.

In the above arrangement, when a potential difference between the collector of the transistor 44 and the collector of the transistor 46 is about 0.7 V, i.e., when it is a noncorrelation state, the pnp transistor 43 is turned on to supply a current I to ground from the power source Vcc through the resistor 49. When the potential difference is 0.7 V or less, i.e., when it is a correlation state, the transistor 43 is turned off not to supply the current I. Therefore, a binary signal having difference levels in the noncorrelation and correlation states is generated, and the switches 15 and 17 can be controlled to be on and off states.

Note that the present invention is not limited to the above embodiments, and various modifications can be made. For example, in the circuit of the embodiment in Fig. 2, the limit level of the limiter circuit 13 and the noncorrelation detection level of the noncorrelation detector 20 are controlled in accordance with a level of the input signal. However, the circuit of the embodiment may be arranged to control only the noncorrelation detection level of the noncorrelation detector 20 in accordance with the level of the input signal. In addition, in the circuits of the above described embodiments, the limit level of the limiter circuit 13 or the noncorrelation detection level of the noncorrelation detector 20 is controlled in accordance with the level of the input signal. However, the limit level and the noncorrelation detection level may be controlled in accordance with the output level of the delay circuit 12.

As described above, according to the present invention, there is provided a comb filter circuit capable of satisfactorily removing noise and obtaining visually excellent picture quality.

Reference signs in the claims are intended for better understanding and shall not limit the scope.

## Claims

1. A comb filter circuit characterized by comprising:
delaying means (12) for delaying an input signal by a predetermined period to output a delayed signal;
subtracting means (11) for calculating a difference between said input signal and said delayed signal output from said delaying means (12) to output a difference signal;
limiter means (13) for limiting said difference signal output from said subtracting means (11) by a limiter level changed in accordance with a level of any one of said input signal and said delayed signal to output a limit signal; and
calculating means (16, 18) for receiving said input signal and said limit signal from said limiter means (13) to perform a predetermined calculating operation.

2. A circuit according to claim 1, characterized by further comprising means (14) for amplifying said limit signal from said limiter circuit (13).

3. A circuit according to claim 1, characterized in that said calculating means (16, 18) comprises an adder (18) and a subtractor (16) performing an addition and a subtraction of said input signal and said limit signal from said limiter means (13).

4. A circuit according to claim 1, characterized by further comprising switching means (15, 17) connected to said calculating means (16, 18) and a noncorrelation detector (19) for detecting a degree of noncorrelation between said input signal and said delayed signal from said subtractor (11), wherein when the degree of noncorrelation is large, a control signal is supplied from said noncorrelation detector (19) to said switching means (15, 17) to turn it off so as to stop calculations performed by said calculating means (16, 18).

5. A comb filter circuit characterized by comprising:
delaying means (12) for delaying an input signal by a predetermined period to output a delayed signal;
subtracting means (11) for calculating a difference between said input signal and said delayed signal output from said delaying means (12) to output a difference signal;
limiter means (13) for limiting said difference signal output from said subtracting means (11) by a limiter level changed in accordance with a level of any one of said input signal and said delayed signal to output a limit signal;
calculating means (16, 18) for receiving said input signal and said limit signal from said limiter means (13) to perform a predetermined calculating operation; and
noncorrelation detecting means (19) for detecting a degree of noncorrelation between said input signal and said delayed signal from said difference signal output from said subtracting means (11) at a level changed in accordance with a level of any one of said input signal and said delayed signal.

6. A circuit according to claim 5, characterized by further comprising means (14) for amplifying said limit signal from said limiter means (13).

7. A circuit according to claim 5, characterized in that said calculating means (16, 18) comprises an adder (18) and a subtractor (16) performing an addition and a subtraction of said input signal and said limit signal from said limiter means (13).

8. A circuit according to claim 5, characterized by further comprising switching means (15, 17) connected to said calculating means (16, 18), wherein when the degree of noncorrelation is large, a control signal is supplied from said noncorrelation detecting means (19) to said switching means (15, 17) to turn it off so as to stop calculations performed by said calculating means (16, 18).

9. A comb filter circuit characterized by comprising:
delaying means (12) for delaying an input signal by a predetermined period to output a delayed signal;
subtracting means (11) for calculating a difference between said input signal and said delayed signal output from said delaying means (12) to output a difference signal;
calculating means (16, 18) for receiving said input signal and said limit signal from said limiter means (13) to perform a predetermined calculating operation; and
noncorrelation detecting means (19) for detecting a degree of noncorrelation between said input signal and said delayed signal from said difference signal output from said subtracting means (11) at a level changed in accordance with a level of any one of said input signal and said delayed signal.

10. A circuit according to claim 9, characterized by further comprising a limiter circuit (13) for limiting said difference signal from said subtracting means (11) to output said limit signal, and means (14) for amplifying said limit signal from said limiter circuit (14).

11. A circuit according to claim 9, characterized in that said calculating means (16, 18) comprises an adder (18) and a subtractor (16) performing an addition and a subtraction of said input signal and said limit signal from said limiter means (13).

12. A circuit according to claim 9, characterized by further comprising switching means (15, 17) connected to said calculating means (16, 18), wherein when the degree of noncorrelation is large, a control signal is supplied from said noncorrelation detecting means (19) to said switching means (15, 17) to turn it off so as to stop calculations performed by said calculating means (16, 18).

F I G. 1

EP 0 398 089 A2

INPUT
SIGNAL

+ 11
−

12
DELAY
CIRCUIT

13
LIMITER

14
AMPLIFIER

15

NONCORRE-
LATION
DETECTOR

20

17

+ 16
−

+ 18
−

OUTPUT
SIGNAL

OUTPUT
SIGNAL

F I G.  2

V<sub>CC</sub>

~35

OUTPUT SIGNAL
TO AMPLIFIER 14

OUTPUT SIGNAL
FROM
SUBTRACTOR 11

~33

34~

31~

~32

36~

INPUT SIGNAL

37~

F I G. 3

F I G. 4